# EUROPEAN PATENT APPLICATION

(11) **EP 4 847 976 A1**
(43) Date of publication of application: **02.12.2026**
(21) Application number: 26165194.7
(22) Date of filing: 16.03.2026
(51) Int. Cl.: G02B 6/02, C03B 37/025, G01N 21/952, G01M 11/00

(54) **IMPROVED HOLLOW CORE FIBER MICROSTRUCTURE CHARACTERISATION**

(30) Priority: 30.05.2025 EP 25179872
(71) Applicant: Microsoft Technology Licensing, LLC, Redmond, WA 98052 (US)
(72) Inventor: SANDOGHCHI, Seyed Reza, Redmond, 98052 (US); WILLIAMS, Matthew Ian Ronald, Redmond, 98052-6399 (US); CHRIS-MBA, Dumebi Junior Clinton, Redmond, 98052-6399 (US); MALTESE, Giorgio, Redmond, 98052 (US); MOCSAI, Bence Ferenc, Redmond, 98052 (US)
(74) Representative: CMS Cameron McKenna Nabarro Olswang LLP

(57) **Abstract**

A method and a system for monitoring the internal structure of an antiresonant hollow core fiber (HCF). The method comprising: positioning a light source and an optical microscope on opposing sides of a longitudinal section of an antiresonant HCF at a plurality of angles around a circumference of the antiresonant HCF; illuminating the antiresonant HCF using the light source; detecting a plurality of micrographs at the plurality of angles using the optical microscope; constructing a sinogram from the plurality of micrographs using computed tomography, extracting and interpolating a pixel intensity profile across a repeating pattern along the central portion of the sinogram at a predetermined angle to generate an interpolated pixel intensity profile; and determining dimensions and characteristics of a spacing between a pair of the plurality of tubular capillaries using the interpolated pixel intensity profile.

## Description

### BACKGROUND

Hollow Core Fibers are a new class of optical fibers. In contrast to traditional solid core fibers, light is guided in a hollow central core rather than solid glass. Hollow core fibers provide numerous benefits compared to solid core fibers such as reduced optical propagation loss, increased signal propagation speed, wider optical transmission bandwidth and reduced nonlinear optical effects. Hollow core fibers can also withstand higher damage thresholds compared to solid core fibers.

Optical fibers are utilized for high-capacity data transmission over long distances and are becoming increasingly important as consumers and businesses become more reliant on network services and cloud storage and computing resources. The key advantages provided by hollow core fibers compared to solid core fibers, as highlighted above, make them a better candidate for various applications in the field of data transmission.

A key challenge associated with manufacturing hollow core fibers is accurately monitoring the internal microstructure of the hollow core fiber. This challenge is made greater due to the increasingly complex internal geometry of microstructured hollow core fibers.

The embodiments described below are not limited to implementations which solve any or all of the disadvantages of known methods for monitoring the internal structure of an antiresonant hollow core fiber.

### SUMMARY

The following presents a simplified summary of the disclosure in order to provide a basic understanding to the reader. This summary is not intended to identify key features or essential features of the claimed subject matter nor is it intended to be used to limit the scope of the claimed subject matter. Its sole purpose is to present a selection of concepts disclosed herein in a simplified form as a prelude to the more detailed description that is presented later.

Described herein is a method for monitoring the internal structure of an antiresonant hollow core fiber (HCF), the method comprising: positioning a light source and an optical microscope on opposing sides of a longitudinal section of an antiresonant HCF at a plurality of angles around a circumference of the antiresonant HCF, wherein the antiresonant HCF comprises an outer tubular cladding and an internal structure comprising a plurality of tubular capillaries extending longitudinally along the length of the antiresonant HCF which are attached to the inner surface of the tubular cladding, wherein the plurality of tubular capillaries define a hollow core extending longitudinally along the antiresonant HCF; illuminating the antiresonant HCF using the light source; detecting a plurality of micrographs at the plurality of angles using the optical microscope, wherein each micrograph comprises a pixel intensity pattern caused by light transmitted through the antiresonant HCF from the light source; constructing a sinogram from the plurality of micrographs, wherein the sinogram comprises a first axis defined by the angle around the circumference of the antiresonant HCF and a second axis defined by a cross-sectional distance defined by the antiresonant HCF, wherein the sinogram comprises a repeating pattern of pixel intensities in the direction of the first axis including along a central portion of the sinogram; extracting and interpolating a pixel intensity profile across the repeating pattern along the central portion of the sinogram at a predetermined angle along the first axis to generate an interpolated pixel intensity profile; and determining dimensions and characteristics of a spacing between a pair of the plurality of tubular capillaries using the interpolated pixel intensity profile.

Described herein is also a system for monitoring the internal structure of an antiresonant hollow core fiber (HCF) wherein the antiresonant HCF comprises an outer tubular cladding and an internal structure comprising a plurality of tubular capillaries extending longitudinally along the length of the antiresonant HCF which are attached to the inner surface of the tubular cladding, wherein the plurality of tubular capillaries define a hollow core extending longitudinally along the antiresonant HCF, the system comprising: a light source; an optical microscope positionable on an opposing side of a longitudinal section of an antiresonant HCF at a plurality of angles around a circumference of the antiresonant HCF; a measurement system connected to the optical microscope and the light source, wherein the measurement system is configured to: illuminate the antiresonant HCF using the light source; detect a plurality of micrographs at the plurality of angles using the optical microscope, wherein each micrograph comprises a pixel intensity pattern caused by light transmitted through the antiresonant HCF from the light source; construct a sinogram from the plurality of micrographs, wherein the sinogram comprises a first axis defined by the angle around the circumference of the antiresonant HCF and a second axis defined by a cross-sectional distance defined by the antiresonant HCF, wherein the sinogram comprises a repeating pattern of pixel intensities in the direction of the first axis including along a central portion of the sinogram; extract and interpolate a pixel intensity profile across the repeating pattern along the central portion of the sinogram at a predetermined angle along the first axis to generate an interpolated pixel intensity profile; and determine dimensions and characteristics of a spacing between a pair of the plurality of tubular capillaries using the interpolated pixel intensity profile.

Many of the attendant features will be more readily appreciated as the same becomes better understood by reference to the following detailed description considered in connection with the accompanying drawings.

### DESCRIPTION OF THE DRAWINGS

The present description will be better understood from the following detailed description read in light of the accompanying drawings, wherein:
FIG. 1A shows a schematic of a side view of an antiresonant hollow core fiber, HCF;
FIG. 1B shows a schematic transverse cross-sectional view of an antiresonant hollow core fiber;
FIG. 1C shows a schematic transverse cross-sectional view of a nested nodeless antiresonant hollow core fiber, NANF;
FIG. 1D shows a schematic transverse cross-sectional view of a double nested nodeless antiresonant hollow core fiber, DNANF;
FIG. 1E shows a schematic transverse cross-sectional view of a triple nested nodeless antiresonant hollow core fiber, TNANF;
FIG. 2 shows a schematic diagram representing the generation of a micrograph of an antiresonant HCF using a light source;
FIG. 3 shows a micrograph and intensity profile detected from light transmitted through an antiresonant HCF;
FIG. 4 shows a schematic diagram representing the generation of a sinogram from an antiresonant HCF;
FIG. 5A shows a sinogram annotated with the measurement of a spacing between tubular capillaries arranged on an inner surface of an outer tubular cladding;
FIG. 5B shows a schematic transverse cross-sectional view of a nested nodeless antiresonant hollow core fiber, NANF, annotated with a distance between tubular capillaries arranged on an inner surface of an outer tubular cladding;
FIG. 6A shows a sinogram for a nested nodeless antiresonant hollow core fiber with touching tubular capillaries arranged on an inner surface of an outer tubular cladding;
FIG. 6B shows a schematic transverse cross-sectional view of a nested nodeless antiresonant hollow core fiber, NANF, with touching tubular capillaries;
FIG. 7 shows additional steps for processing a sinogram to determine spacing between tubular capillaries;
FIG. 8A shows an interpolated pixel intensity profile indicating stable cladding capillaries;
FIG. 8B shows an interpolated pixel intensity profile indicating contact between cladding capillaries;
FIG. 8C shows an interpolated pixel intensity profile indicating contact between an outer capillary and a nested capillary;
FIG. 8D shows a schematic diagram of contact between an outer capillary and a nested capillary;
FIG. 9 shows a method flow for monitoring the internal structure of an antiresonant hollow core fiber; and
FIG. 10 shows a fiber drawing tower modified with a system for monitoring the internal structure of an antiresonant HCF.
Like reference numerals are used to designate like parts in the accompanying drawings.

### DETAILED DESCRIPTION

The detailed description provided below in connection with the appended drawings is intended as a description of the present examples and is not intended to represent the only forms in which the present examples are constructed or utilized. The description sets forth the functions of the examples and the sequence of operations for constructing and operating the examples. However, the same or equivalent functions and sequences may be accomplished by different examples.

Described herein are techniques capable of characterizing the internal structure of antiresonant hollow core fibers (HCFs) non-destructively and with improved precision compared to existing methods. In particular, the described techniques are directed to characterising the internal structure of antiresonant HCFs in-line. Since optical properties of antiresonant HCFs are strongly influenced by the size and shape of the internal structure, monitoring and controlling the dimensions of the internal structure is important to the manufacture high quality optical fiber.

The techniques described herein involve the use of an optical microscope-light source pair to characterise the internal structure of an antiresonant HCF. The light source is placed on an opposite side of the antiresonant HCF to the optical microscope such that when the fiber is illuminated by the light source, the optical microscope detects a pattern (or micrograph) formed by the diffraction/refraction/reflection of the light as it passes through the fiber. The resulting pattern can be used to characterise the internal structure of the antiresonant HCF.

The techniques described herein focus on determining the dimensions and the characteristics of a spacing between cladding capillaries (or "resonators") arranged around the internal surface of the outer cladding of the fiber.

In hollow core optical fibers, light is guided through a longitudinal hollow central core, rather than in solid glass as is the case for solid core fibers. Typically, a hollow core fiber includes a central hole surrounded by a plurality of peripheral channels extending longitudinally along the fiber length. The term "longitudinally" in the context of optical fibers is defined as the length of the fiber or along the direction light propagates through the fiber. As will be explained later, the plurality of peripheral channels may be located in various geometrical arrangements and have very high longitudinal consistency. Compared to solid core fibers, hollow core fibers provide potential benefits such as reduced loss from both glass absorption and scattering, increased propagation speed and reduced optical nonlinearities making hollow core optical fiber very attractive for use in applications such as telecommunications. However, manufacturing hollow core optical fiber in lengths that are practical for telecommunications (tens to hundreds of kilometers) is challenging owing to the complexities in controlling the microstructure within the hollow core fiber. This is particularly important if hollow core fibers are to be used to connect data centers located in geographically remote areas. A class of hollow core optical fibers which has been shown to have beneficial optical properties is antiresonant hollow core fiber (AR-HCR or ARF).

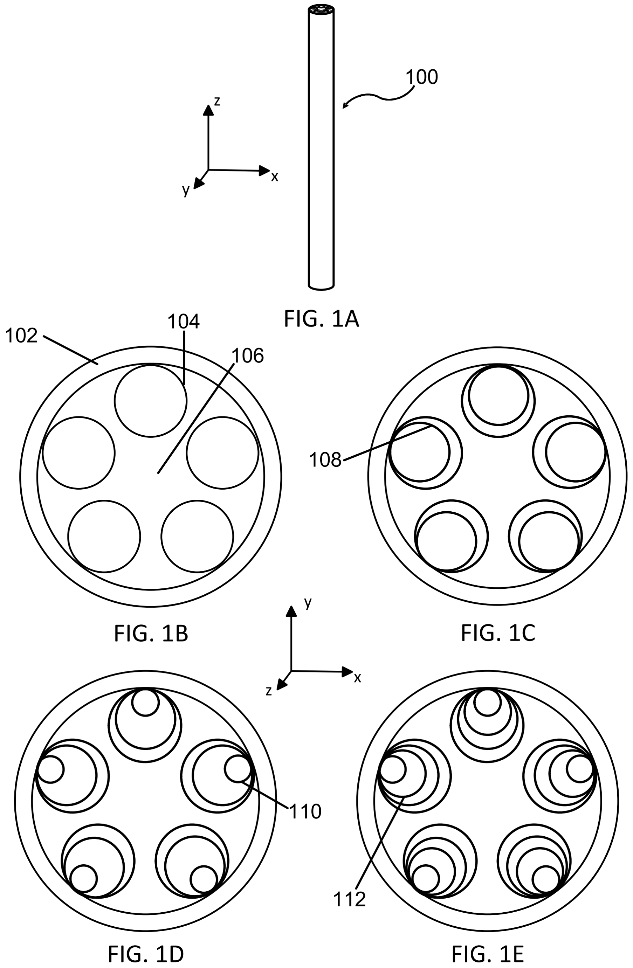

Antiresonant hollow core fibers are characterized by the design of their internal structure (i.e., the microstructure) within a glass tubular cladding. These fibers guide light at antiresonant wavelengths governed by the geometry of the microstructure. Guiding light in this way can offer a wider bandwidth compared to other hollow core fiber designs such as photonic bandgap fibers and also minimize the electric field at the air-glass interface which can help reduce the loss incurred from surface roughness scattering. FIGs. 1B-1E show examples of the internal structure of a collection of antiresonant hollow core designs. FIG. 1A shows a schematic diagram of the side view of a hollow core optical fiber 100.

FIG. 1B shows a schematic transverse cross-sectional view of an antiresonant hollow core fiber (HCF). The HCF has an outer tubular cladding 102, a structured inner cladding comprising a plurality of tubular capillaries 104 extending longitudinally along the length of the fiber which are attached to the inner surface of the tubular cladding. These tubular capillaries 104 are also referred to as resonators. The plurality of tubular capillaries 104 is arranged to form a ring around the inner surface of the tubular cladding and define a hollow core 106. The tubular capillaries define a plurality of voids surrounding the hollow core, and in some cases are spaced evenly around the inner surface of the outer cladding.

FIG. 1C shows a schematic transverse cross-sectional view of a nested antiresonant nodeless fiber (NANF) which falls into the category of antiresonant HCFs. It differs from the antiresonant HCF of FIG. 1B in that it includes first additional capillaries 108 nested within the tubular capillaries 104 and also attached to the inner surface of the outer cladding 102. The inclusion of nested capillaries has been shown to reduce loss within antiresonant hollow core fibers and also to improve the modal purity. It achieves this by making the fiber single mode and suppressing the higher order modes which is a quality that is desirable for data transmission.

FIG. 1D shows a schematic transverse cross-sectional view of a double nested antiresonant nodeless fiber (DNANF) which falls into the category of antiresonant HCFs. It differs from the NANF of FIG. 1C in that it includes a second additional capillary 110 nested within the larger nested capillaries and also attached to the inner surface of the outer cladding 102. The addition of further nested capillaries provides an additional reduction of optical losses within antiresonant hollow core fibers.

FIG. 1E shows a further extension of the DNANF which is a triple nested antiresonant nodeless fiber (TNANF) which falls into the category of antiresonant HCFs. The TNANF differs from the DNANF whereby a third additional capillary 112 is included into the sets of nested capillaries and also attached to the inner surface of the outer cladding 102. The inclusion of another nested capillary has also been shown to provide an additional reduction of optical losses within antiresonant hollow core fibers.

Optical loss in HCFs is primarily determined by the design, geometry and longitudinal uniformity of the microstructure (e.g., in DNANF, by the size and thickness of resonators, or nested capillaries, defining the hollow core). These properties define the transmission window (the range of wavelengths which are transmitted) and its depth (how low the transmission loss is at those wavelengths). During manufacture of HCFs, it is therefore critical to control the geometry of the internal structure to ensure optimal optical performance.

Amongst the key components of the internal structure of the antiresonant HCF to be monitored is the spacing between the capillaries arranged around the inside surface of the outer tubular cladding and whether these capillaries are in contact with one another. In addition, the shape of the resonators which defines the dimensions and characteristics of the spacing between the cladding capillaries is also important to monitor.

Monitoring the internal structure of HCFs is challenging for a number of reasons. It is highly desirable for the geometry of the internal structure to be measurable whilst the fiber is being drawn. The monitoring techniques therefore need to be able to perform measurements at high draw speeds. In some examples, the draw speed can be as high as 3000 meters per minute or even higher. Slowing down the draw speed such that measurements can be performed results in a reduction in manufacture efficiency. The monitoring of the internal structure also needs to be non-destructive if the monitoring takes place during manufacture so the quality of manufactured fibers is not affected. Finally, measurements need to take place in real-time during manufacture such that the readings can be fed back to the systems controlling the fiber draw. This ensures errors in the fiber can be identified instantly to prevent the continuous manufacture of faulty optical fiber. In addition, being able to instantly feed back the geometry of the internal structure to a draw control system means drawing parameters (e.g., draw speed, pressure applied to each of the nested capillaries, tension, draw furnace temperature) can be altered to ensure consistent drawing results.

Various techniques for monitoring hollow core fibers have been developed, however they have not been able to overcome the challenges associated with inline monitoring and control of antiresonant HCF internal microstructure. For example, the use of suitable IR or visible light cameras to inspect an illuminated optical fiber at its guiding wavelength so that defects in the fiber can be identified does not reveal details about the HCF microstructure. Optical side scattering radiometry (OSSR) is another technique that has been used to inspect HCFs. OSSR uses an integrating sphere with a suitable detector to collect light that is scattered out of an illuminated HCF to reveal microstructure nonuniformities. However, this technique also does not reveal details about the internal structure of the HCF. Micro X-ray computed tomography, which uses x-ray imaging and tomography techniques, is a technique which can be used to resolve highly detailed microstructural geometry of HCFs. This method is extremely slow and not suitable for inline monitoring processes.

In contrast, the technique described herein, which is also referred to as Transmission Optical Side Micrograph Computed Tomography (TOSMiCT), reveals detailed information of relatively complex HCFs (e.g., DNANFs) and operates at relatively high draw speeds and provides high longitudinal resolution along the fiber length. For example, the TOSMiCT technique is able to collect data when draw speeds exceed 3000 meters per minute. The technique utilizes a combination of multiple optical microscopes to capture magnified radiograph-like images of antiresonant HCFs using visible light and tomography methods to determine the microstructure of HCFs. This technique can be incorporated into the HCF manufacture process. The techniques described herein have been shown to be particularly effective when measuring the gaps between the tubular capillaries 104 and have also shown to be reliable when detecting contact between the tubular capillaries 104.

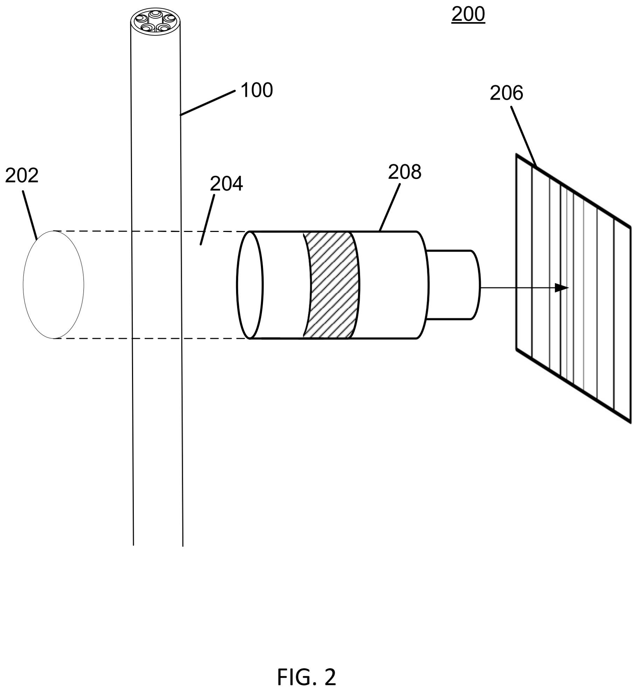

FIG. 2 illustrates the basic principle of the TOSMiCT technique described herein. The system 200 includes a light source 202 and an optical microscope 208 are positioned on opposing sides of an antiresonant HCF 100. The optical microscope 208 captures a side image of the antiresonant HCF 100 that has been illuminated by the light source 202. The light source may emit either collimated or uncollimated light. The transmitted light 204 which passes through the antiresonant HCF 100 and is collected by the optical microscope creates a striped pattern 206. The detected striped pattern is also referred to as a micrograph. The stripes stem from the light from the light source 202 being diffracted by the internal structure of the antiresonant HCF as well as the refraction of the light as it passes through the HCF. The detected pattern is also caused by interference of the light being diffracted by the antiresonant HCF. The characteristics of the striped pattern are therefore directly influenced by the geometry of the HCF including its internal microstructure (e.g. the arrangement of capillaries as shown in FIGs. 1B-1E) and the outer cladding 102.

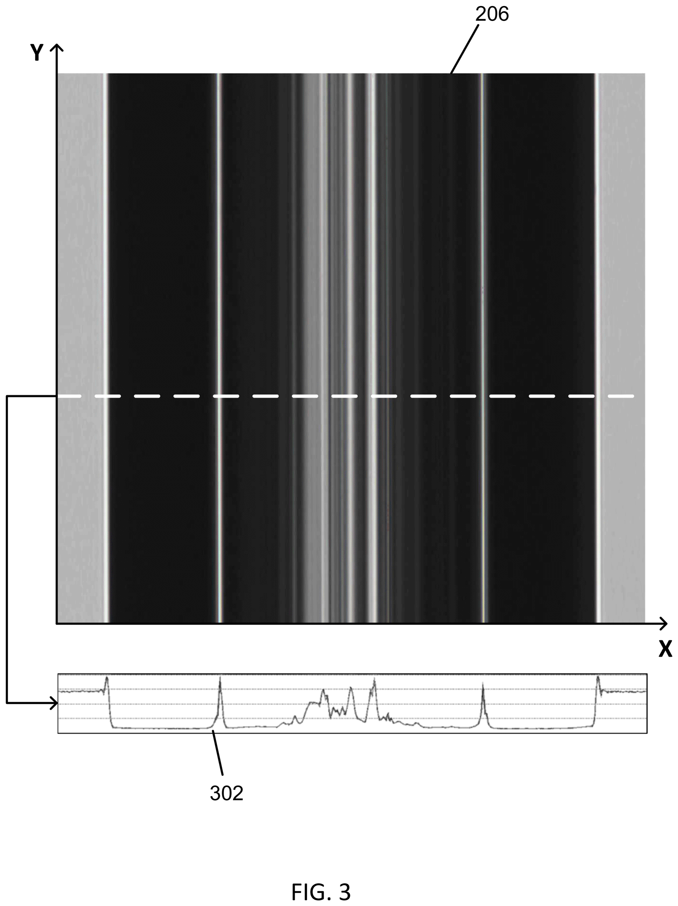

An example micrograph detected from a single position from the side of the HCF is presented in FIG. 3. Specifically, the micrograph 206 is of a NANF (see FIG. 1C). The y-axis of the micrograph 206 is representative of the longitudinal displacement along the length of the HCF. The x-axis of the micrograph 206 is representative of the variations in light intensity (or pixel intensity of the micrograph detected by the optical microscope), caused by the diffraction and interference of the light passing through the HCF as discussed previously. The micrograph may also be referred to as an intensity or pixel intensity profile. FIG. 3 shows an intensity plot 302 taken from a single row of pixels from the micrograph 206. Given the complexity of the internal structure of antiresonant HCFs, such as DNANFs, the necessary information to fully characterize the geometry of the internal structure cannot be obtained from a single micrograph.

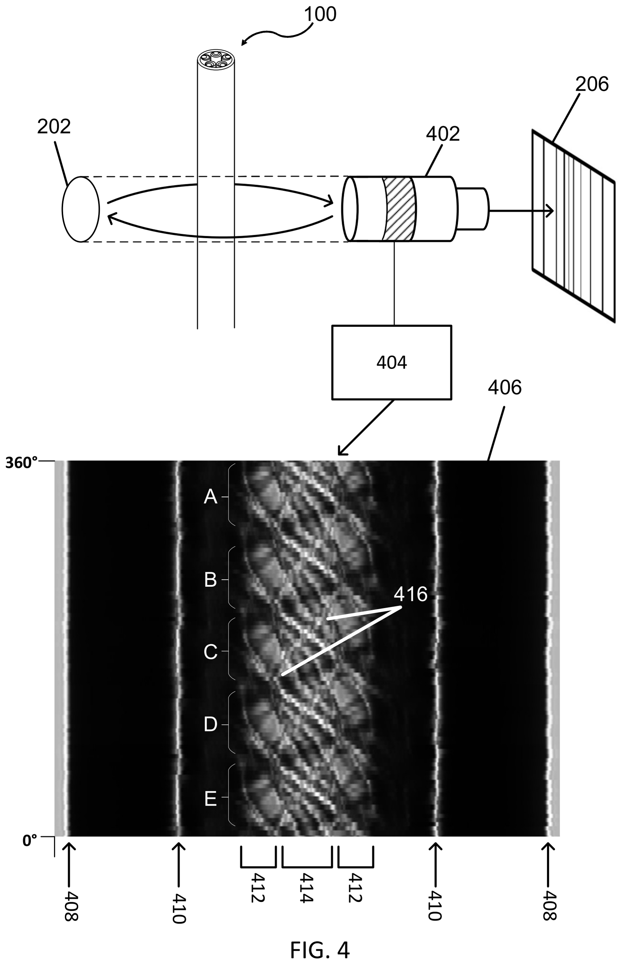

FIG. 4 illustrates how, by collecting micrographs at a plurality of angles around the circumference of the HCF, the internal microstructure of the HCF can be characterized. FIG. 4 shows a light source 202 and an optical microscope 402 positioned on opposing sides of the longitudinal section of an antiresonant HCF 100. The arrows represent the light source 202 and the optical microscope 402 being positioned at a plurality of angles around the circumference of the HCF 100 (e.g. as the light source 202 and optical microscope 402 are rotated in a clockwise direction around the HCF 100). There are a number of ways multiple micrographs can be detected from a plurality of angles including: using a plurality of light source-optical microscope pairs arranged in a circle around the HCF, rotation of the one or more optical microscopes around the HCF, and/or rotation of the HCF relative to the one or more optical microscopes. It should be appreciated that positioning the light source and the optical microscope at a plurality of angles around the circumference of the HCF includes any of these configurations.

At each angle of the plurality of angles, the optical microscope 402 detects a micrograph 206 for a single longitudinal position along the HCF 100 or an intensity profile from an integration of the intensity profiles from multiple positions along the longitudinal length of the HCF 100. The intensity profiles are communicated to a microstructure measuring system 404 which employs computed tomography related techniques to convert the plurality of intensity profiles into a sinogram 406. Each increment along the y-axis of the sinogram 406 represents the different angles from which micrographs are detected around the circumference of the antiresonant HCF. Accordingly, the y-axis ranges from 0° to 360° in the sinogram 406. The increments along the y-axis of the sinogram are dictated by how many positions of the light source and optical microscope are used. The example sinogram presented in FIG. 4 is of a NANF where the angular resolution (increments along the y-axis) is 4°. The x-axis, as explained previously, represents the intensity profile from the micrographs across the width of the HCF.

The sinogram 406 exhibits numerous consistent characteristics for antiresonant HCFs (including NANFs, DNANFs and TNANFs) that reflect the structure of the fiber. The sinogram 406 includes a first pair of vertical stripes 408 exhibiting bright or high intensity positioned towards the outside of the sinogram (e.g. at extreme low and high values on the x-axis). The sinogram 406 also includes a second pair of vertical stripes 410 positioned inside the first pair of vertical stripes 408. Similarly, the second pair of vertical stripes 410 also exhibit bright or high pixel intensity relative to nearby pixels. The central portion of the sinogram 406 shows a vertically repeating pattern. Since the sinogram 406 has been constructed from a NANF comprising five tubular capillaries arranged in a ring around the inner surface of the outer tubular cladding, the vertically repeating pattern comprises five repetitions. For example, the diagonal elements of the pattern in the central portion of the sinogram 406 repeats five times, as indicated by the brackets labelled A-E in FIG. 4. The pattern in the central portion of the sinogram 406 is made up of a pair of columns 412 comprising a first pattern and a single column 414 comprising a second pattern that is different to the first pattern. Each column extends over the entirety of the length of the y-axis of the sinogram but only a portion of the width of the x-axis of the sinogram. The pair of columns 412 comprising the first pattern are positioned inside the second pair of vertical stripes 410 and the single column 414 comprising the second pattern is positioned within the pair of columns 412. The pair of columns 412 and the single central column 414 are positioned immediately adjacent to one another such that two boundaries 416 are present between the outer edges of the single central column 414 and inside edges of the pair of columns 412. It should be noted that although the pair of columns 412 and the single central column 414 comprise different patterns, there are features of the sinogram that pass through both the pairs of columns 412 and the single central column 414. For example, the sinogram 406 shows five diagonal dark (lower intensity) lines and five diagonal light (higher intensity) lines of different orientation passing through all three of the central columns (the pair of columns 412 and single central column 414). To further clarify the description of the sinogram 406 for antiresonant HCFs, the edges of the columns are defined by regions with repeating patterns aligned along the y-axis (or aligned with the first 408 and second 410 pairs of stripes). The features of the sinogram 406 represent characteristic microstructural features of antiresonant HCFs and can therefore be used to monitor the microstructure of HCFs during manufacture.

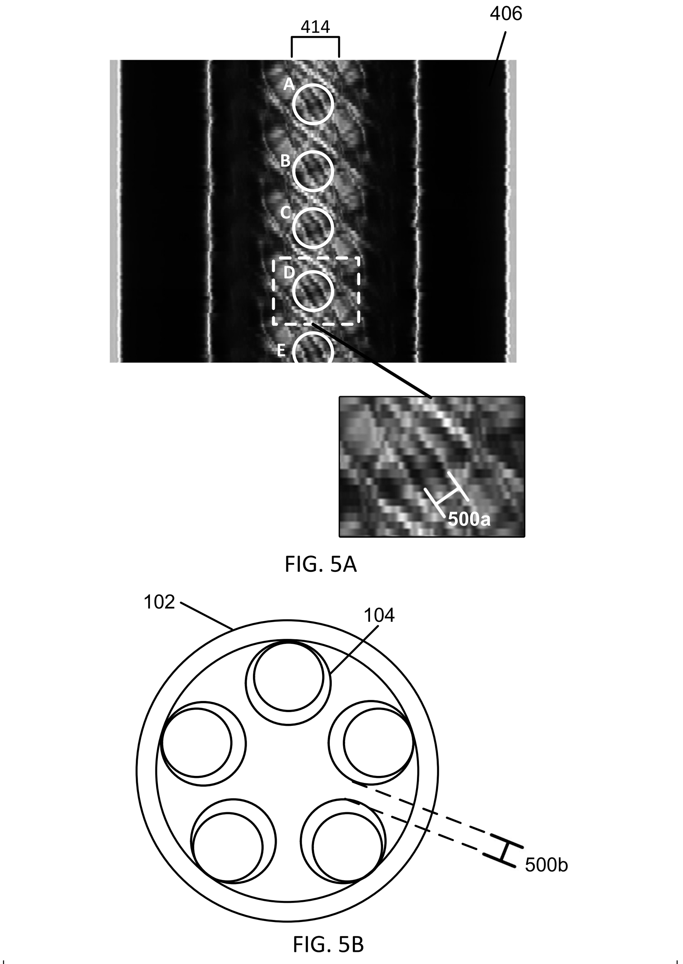

FIGs. 5A and 5B illustrate how the spacing between the tubular capillaries (or the outermost tubular capillaries for the NANF, DNANF and TNANF antiresonant HCFs) arranged around the inside surface of the outer tubular cladding 102 can be determined from a sinogram 406 generated using the technique explained previously. The second pattern contained within the central single column 414 includes a number of intensity features. The inventors have discovered that pairs of dark (or relatively low intensity) diagonal lines which are entirely contained within the single column 414 and positioned centrally within the single column 414 correspond to the gaps (or spacing) between the tubular capillaries 104 arranged on the inside surface of the outer tubular cladding 102. Where gaps are present between all of the tubular capillaries (i.e., there is no contact between the capillaries) arranged around the inner surface of the outer tubular cladding, the number of pairs of dark diagonal lines corresponds to the number of tubular capillaries incorporated into the antiresonant HCF. Using the example where five tubular capillaries (or sets of tubular capillaries) are incorporated into the HCF, the sinogram 406 includes five pairs of dark diagonal lines arranged vertically (aligned parallel to the y-axis) along the central single column 414 representing the five gaps between the tubular capillaries 104. The five pairs of dark, low intensity diagonal lines are circled A to E in the sinogram 406 in FIG. 5A. The distance 500a between the dark diagonal lines for each pair of lines is representative of the size of the spacing 500b between each of the tubular capillaries 104 as illustrated by FIG. 5B.

Monitoring the spacing 500b between the cladding capillaries 104 arranged on the inside surface of the outer tubular cladding 102 is important during manufacture of antiresonant HCF since the optical performance of an antiresonant HCF is directly influenced by the uniformity of the cross-sectional microstructure of the fiber.

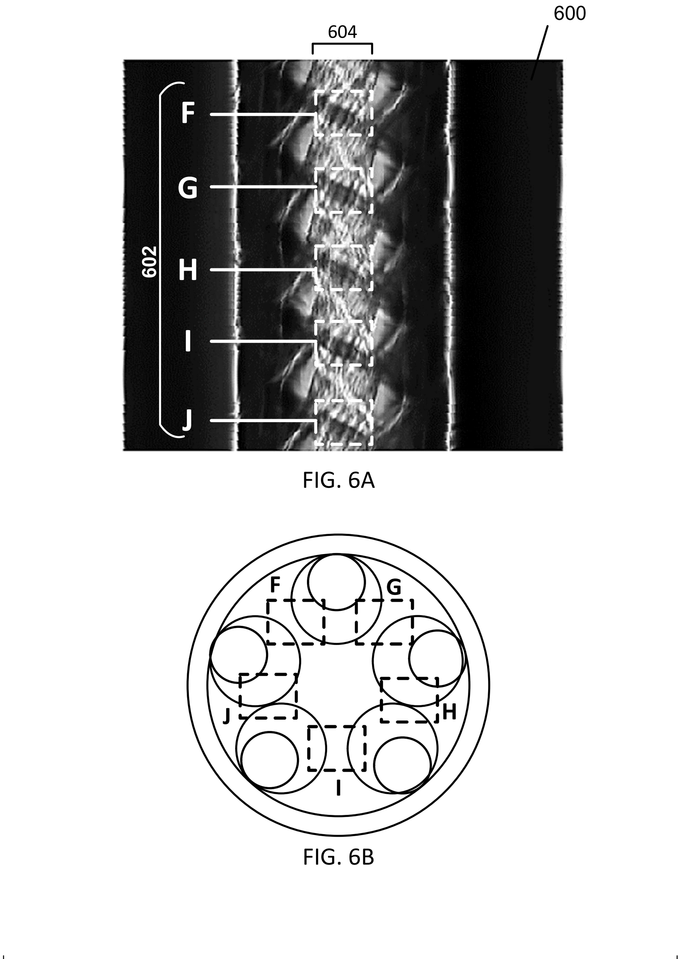

These features of the sinogram shown in FIGs. 5A, or lack of, contained within the central single column can also be used to detect a failure of the internal structure during the manufacture of antiresonant HCFs. FIG. 6A shows another example sinogram 600 constructed from micrographs detected around a NANF. The regions 602 labelled F to J highlight where within the central single column 604 the pairs of diagonal dark lines are expected to be present. However, in regions H and J of the sinogram 600 of FIG. 6A, there is an absence of a pair of dark diagonal lines. The absence of the pair of diagonal dark lines is due to neighboring tubular capillaries contacting one another which is shown schematically in FIG. 6B where the regions H and J show contact between tubular capillaries. Therefore, the sinograms can also be used to detect a failure of the fiber drawing manufacture due to tubular capillaries contacting one another.

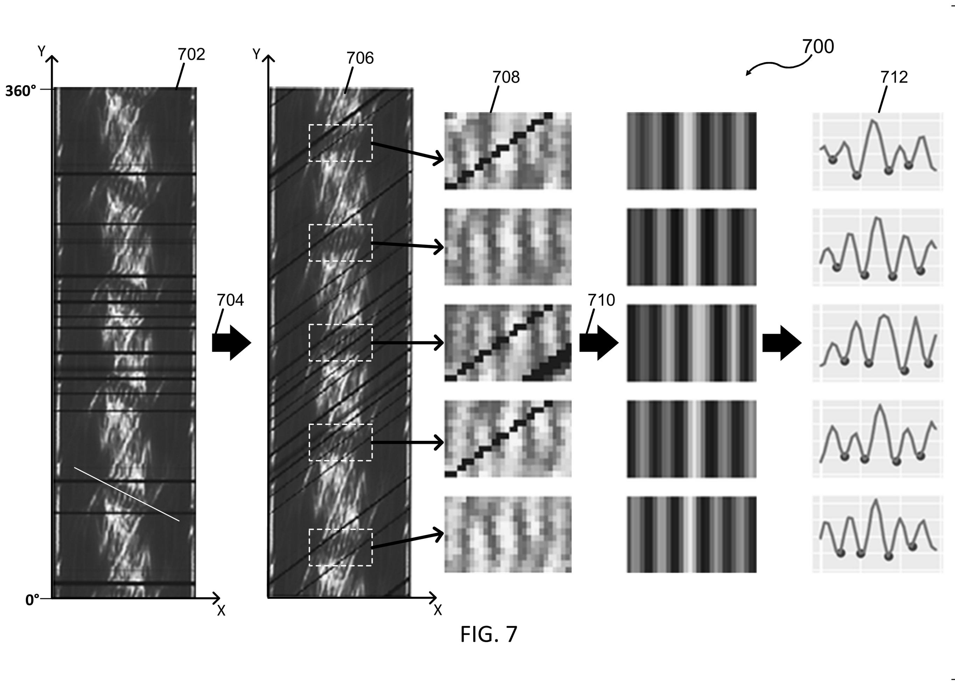

To improve the reliability of the spacing 500b measurement between each of the tubular capillaries 104 and the detection of contact between the tubular capillaries 104, additional processing may be performed on the sinogram. A worked example of this further processing is illustrated in FIG. 7. The process 700 starts with a sinogram 702. The sinogram 702 was constructed from micrographs detected from a DNANF, such as that shown in FIG. 1D. The y axis extends from 0° to 360° for a full rotation around the antiresonant HCF. The x axis, as explained previously, represents the intensity profile from the micrographs across the width of the HCF. In this example, the middle section from a sinogram 406 such as the one shown in FIG. 4 is taken. The sinogram 702 shows the repeating pattern running parallel to the y axis of the sinogram. The dark horizontal lines (parallel to the x axis) shown in the data show where data has not been collected (i.e., in a high speed fiber draw).

A vertical shear operation 704 may be performed on the sinogram to produce a sheared sinogram 706. The vertical shear operation shifts pixels of the sinogram up and down relative to the y axis according to their distance from the middle (along the x axis) of the sinogram. Sections of the sheared sinogram are then extracted 708 which correspond to the regions of dark (low intensity lines). The extracted segments may be selected based on characteristic pattern or known angular displacements along the y-axis. For example, it may be known prior to measurement that the gaps between the cladding capillaries 104 occur approximately at angular displacements of 36°, 108°, 180°, 252°, 324° (with a confidence range of ±2°, as an example) in the sinogram for an antiresonant HCF with five-fold symmetry. Alternatively, the extracted segments may be selected by identifying known sections of the repeating pattern in the sinogram. For example, using the sinogram 406 presented in FIG. 5A, sections with a relative distance to prominent features within the pattern (e.g., high intensity or low intensity diagonal lines) may be extracted based on prior knowledge of the characteristic patterns of sinograms detected from antiresonant HCFs. For example, the pairs of dark (or relatively low intensity) lines as indicated in FIG. 5A used for calculating the spacing 500b are typically positioned between the diagonal bright (or relatively high intensity) lines along the central portion of the sinogram. In another example, the pairs of dark (or relatively low intensity) lines are positioned on top and in the center of dark diagonal (or relatively low intensity) lines which are oriented differently to the pairs of dark lines.

A horizontal shear operation may then be performed on the extracted segments 708. The horizontal shear operation shifts pixels of the extracted segments left and right relative to the x axis according to their distance from the middle (along the y axis) of the sinogram. After the two shear operations, the dark (low intensity) lines are, at least approximately, parallel to the y axis. It should be appreciated that performing such a shear operation is optional.

The extracted segments are then averaged along the y axis 710 to produce defined intensity lines aligned parallel to the y axis of the extracted segments. To improve the signal to noise ratio of the sheared extracted segments, a weighted average may be used over multiple sinograms before the shearing and extraction steps. In this case, the pixels are weighted according to how recent the data is (i.e., based on the time of acquisition of the pixel intensity). For example, a time-dependent exponential function may be used to weight the intensity data. After averaging 710, the extracted segments are now one dimensional and can be plotted on a set of axes according to the intensity. Pixel intensity profiles 712 corresponding to the spacing between each of the tubular capillaries are then formed. Each pixel intensity profile is effectively a plot of the pixel intensity with respect to pixel position. Since the example used in FIG. 7 is of an antiresonant HCF with five-fold symmetry, five pixel intensity profiles are produced. The distances between the two minima nearest the center of the sinogram of each pixel intensity profile are then determined which are representative of the spacing 500b between each of the tubular capillaries 104 as illustrated by FIG. 5B. By performing the additional processing of the sinogram using the process 700 in FIG. 7, automatic measurement of the size of the spacing can be made more reliably.

The technique described in FIG. 7 may be further refined. The resolution of sinograms 406 generated using the technique illustrated in FIG. 4 is inherently limited by the fiber draw process. For example, the fiber may be drawn at a speed which limits the time available to record the micrograph 206 collected by the optical microscope 402. Additionally, where the antiresonant HCF is rotated relative to the optical microscope(s), the speed of the rotation may also limit the image acquisition time. The resolution of the measurements of the antiresonant HCF internal structure, such as the measurements illustrated in FIGs. 5A-B and 6A-6B, is therefore also limited. For example, the limited resolution of the spacing 500b measurement between tubular capillaries 104 may induce an error of ±0.7-0.9 µm. It is not practical to reduce the draw speed or rotation speed of the HCF during manufacture to reduce the error of this measurement since doing so may reduce yield and fiber quality.

To reduce the error of the measurement of the spacing 500b between cladding capillaries, additional processing of the sinogram 406 may be performed. The extracted pixel intensity profiles 712 are interpolated to achieve "subpixel" (i.e., resolution finer than the native camera pixel pitch) measurements. The interpolation may include implementing a spline-based interpolation method. The interpolation may also include using configurable smoothing parameters. In one example, the interpolation algorithm employs a univariate spline fitting with a regularization parameter to generate a smoothed mathematical model of raw pixel intensity profiles. This spline may then be upsampled x-fold to achieve subpixel resolution, enabling trough detection at higher pixel precision. In some examples, inverted peak detection with adaptive prominence thresholding is used to identify signal minima in the interpolated pixel intensity profile. A two-tier prominence strategy (10% and 5% thresholds) ensures robustness across varying noise conditions. Detected positions are scaled back to original coordinates and converted to micrometers using a calibration factor of 0.61 micrometers per pixel. The univariate spline method outperforms linear interpolation by producing continuous first and second derivatives, enabling accurate subpixel peak detection that a linear piecewise approach cannot achieve. Compared to Savitzky-Golay, the spline requires only one tunable parameter versus two (window size and polynomial degree), reducing optimization complexity. Spline fitting inherently suppresses noise through regularization while preserving peak shapes better than polynomial-based filters. Computationally, the spline is O(N) post-fitting, faster than the Savitzky-Golay sliding-window convolution. The built-in fallback to linear interpolation ensures robustness when spline fitting encounters degenerate data.

The interpolated pixel intensity profile can then be used to determine dimensions and characteristics of the spacing 500b between the cladding capillaries. By applying such interpolation to the pixel intensity profiles improves the resolution of any spacing measurement from ±0.7-0.9 µm to ~±0.2 µm. The process uniquely handles three capillary configurations: stable gaps which yield four troughs on the pixel intensity profile, touching nodes which yield three troughs on the pixel intensity profile, and contact between outer and nested capillaries which yield additional smaller peaks on the pixel intensity profile. This combination of regularized fitting, subpixel interpolation, and adaptive peak detection delivers (sub)micrometer-level measurement precision for process monitoring and control.

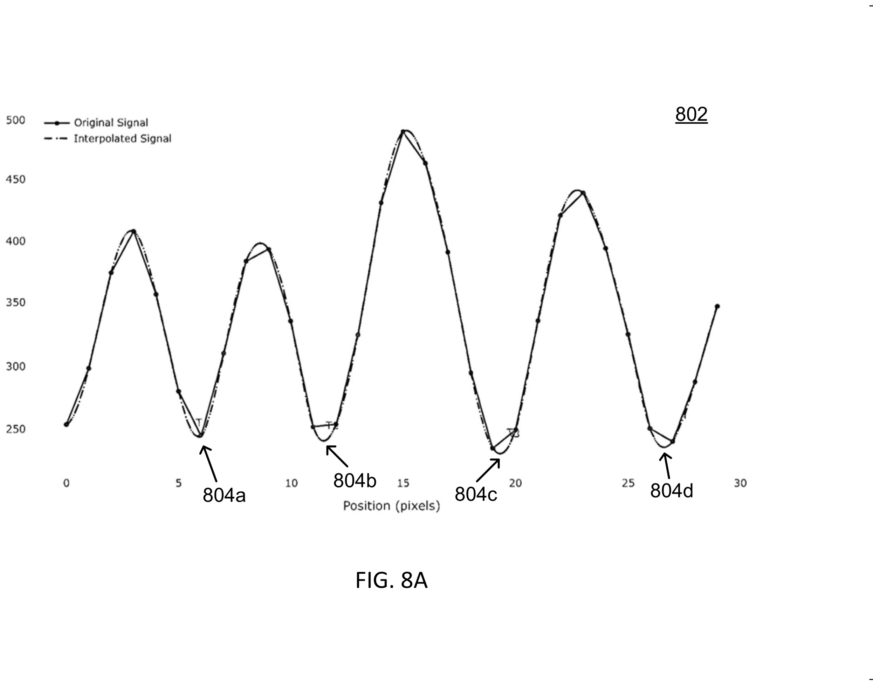

FIG. 8A shows an example plot of a first interpolated pixel intensity profile 802 of an extracted part of the sinogram using the techniques described in reference to FIG. 7. The first interpolated pixel intensity profile 802 shows an example of where a spacing between a pair of cladding capillaries 104 exists and where the cladding capillaries have a regular shape. In the context of this disclosure, the cladding capillaries having a regular shape means that the cross section of the capillaries is at least approximately circular and there is no contact between either of the outer and nested capillaries for the two sets of cladding capillaries.

The first interpolated pixel intensity profile 802 includes a set of four pixel intensity minima 804a-d. This indicates three "gaps" between pairs of outer capillaries and between outer and nested capillaries are intact and properly separated. The three gaps are represented by the distance between the four minima 804a-d. The distance between the middle two minima 804b, 804c is representative of the spacing 500b between two outer cladding capillaries as shown in FIG. 5B. The distance between the left minimum 804a and the center left minimum 804b is representative of the spacing between an outer cladding capillary 104 and a capillary nested 108 within the outer cladding capillary 104 of a first set of cladding capillaries. The distance between the right minimum 804d and the center right minimum 804c is representative of the spacing between an outer cladding capillary 104 and a capillary nested 108 within the outer cladding capillary 104 of a second set of cladding capillaries. The four minima 804a-d therefore show that the cladding capillaries are not deformed.

To calculate the spacing between the pair of (outer) cladding capillaries 104, the minima (or negative peaks/troughs) in the interpolated pixel intensity profile are first identified. The distance between the two centermost minima is then determined. The distance between the two minima is then converted to a real distance using a calibrated pixel to distance ratio. The converted real distance is the measurement of the spacing between the cladding capillaries 104.

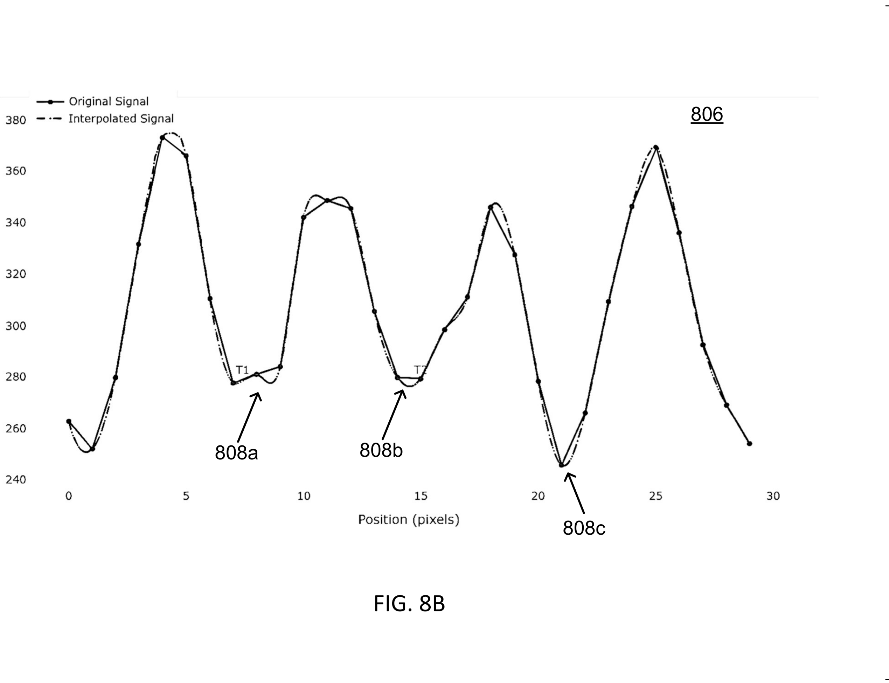

FIG. 8B shows another example plot of a second interpolated pixel intensity profile 804 of an extracted part of the sinogram using the techniques described in reference to FIG. 7. The second interpolated pixel intensity profile 804 shows an example of where the pair of cladding capillaries are in contact. An antiresonant HCF which includes touching cladding capillaries (or resonators) exhibits poor optical performance (e.g., higher optical attenuation). Therefore, detecting when such faults occur in the antiresonant HCF, particularly before the fabrication of a length of fiber is complete, is important to ensure high quality fiber and reduce wastage during manufacture.

The second interpolated pixel intensity profile 806, in contrast to the first interpolated pixel intensity profile 802, includes a set of three pixel intensity minima 808a-c. Compared to the first interpolated pixel intensity profile 802 which includes a pair of central minima 804b-c, the second interpolated pixel intensity profile 806 only includes a single central minimum 806b. This indicates that two outer capillaries are in contact with one another. Examples of contact between outer capillaries are indicated in FIG. 6B as H and J. Detecting such a signal may result in a correction of applied pressure to widen the gaps, termination of the draw process or recording the associated length of fiber as faulty.

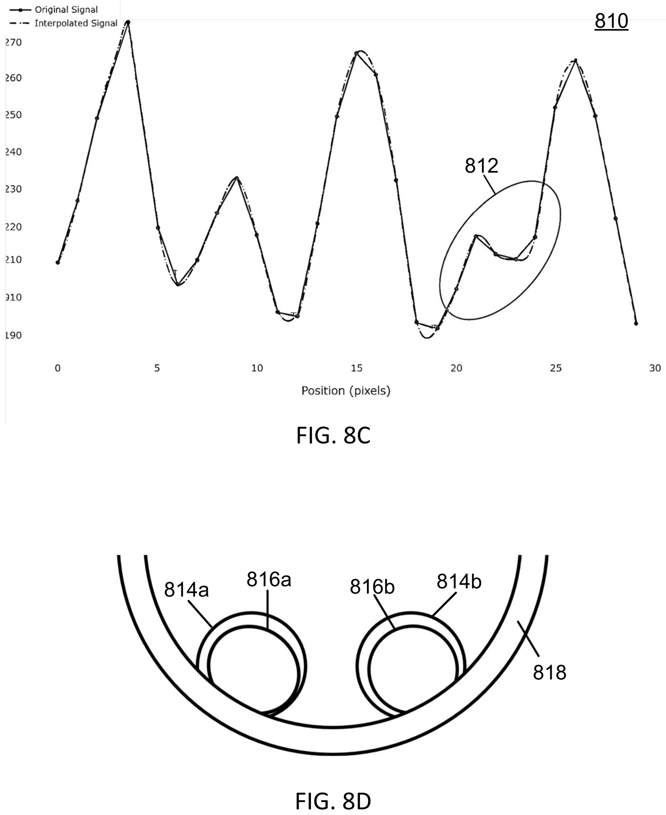

FIG. 8C shows another example plot of a second interpolated pixel intensity profile 810 of an extracted part of the sinogram using the techniques described in reference to FIG. 7. The third interpolated pixel intensity profile 810 shows an example of where contact has occurred between an outer capillary and capillary nested within the outer capillary. An illustration of this defect is shown in FIG. 8D. It shows a pair of outer capillaries 814a, 814b affixed to an inner surface of an outer cladding 818. Nested capillaries 816a, 816b are positioned inside each of the outer capillaries 814a, 814b. The first nested capillary 816a is shown to be in contact with the first outer capillary 814a which may be caused by a deformation to either the outer or nested capillary. This contact causes the pixel intensity profile shown in FIG. 8C. The second outer capillary 814b and second nested capillary 816b shown in FIG. 8D illustrate the stable scenario with no contact between outer and nested capillaries.

The third interpolated pixel intensity profile 810 includes pixel intensity minima with asymmetric positioning. The asymmetry in the pixel intensity profile 810 is caused by an erroneous peak 812 as shown in FIG. 8C. This asymmetry is caused by a deformed capillary creating a merged peak structure in the pixel intensity profile 810. In contrast, the first 802 and second 806 pixel intensity plots both show four and three pixel intensity minima respectively, where the minima are arranged symmetrically about the center of the pixel position axis of the pixel intensity profiles. The center of the pixel position axis of the pixel intensity profiles corresponds to the center of the sinogram along the first axis (showing angular displacement around the circumference of the antiresonant HCF). As shown in FIG. 8C, the pixel intensity minima in the pixel intensity profile 810 are arranged asymmetrically about the center of the pixel position axis of the pixel intensity profiles.

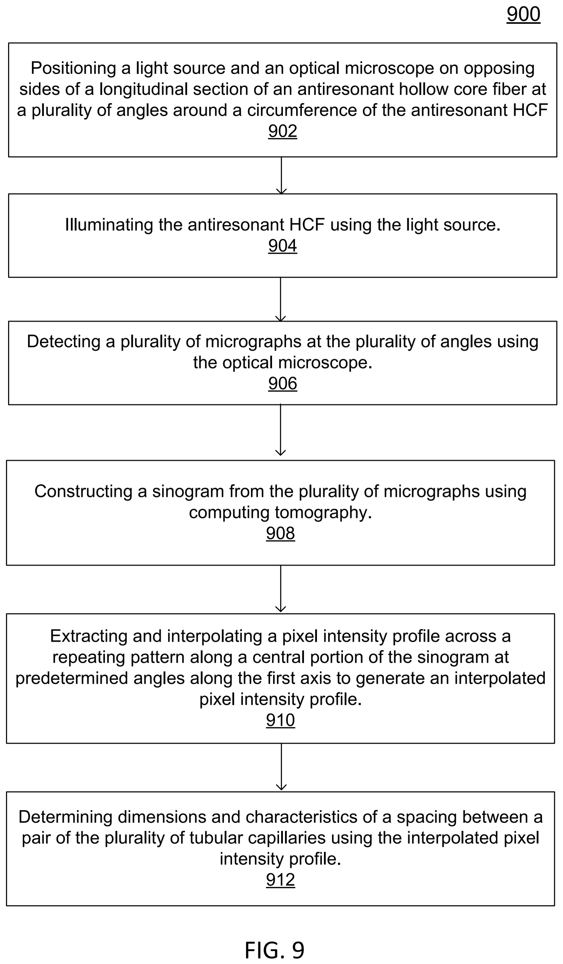

FIG. 9 shows a method flow for monitoring the internal structure of an antiresonant hollow core fiber as discussed above. Firstly, at step 902, the method includes positioning a light source and an optical microscope on opposing sides of a longitudinal section of an antiresonant HCF at a plurality of angles around a circumference of the antiresonant HCF. Once the optical microscope-light source pairs have been positioned, step 904 includes illuminating the antiresonant HCF using the light source. With the antiresonant HCF illuminated, step 906 includes detecting a plurality of micrographs using, at the plurality of angles, the optical microscope, wherein each micrograph comprises a pixel intensity pattern caused by light transmitted through the antiresonant HCF from the light source. The method proceeds to step 908 which includes constructing a sinogram from the plurality of micrographs (e.g., using computed tomography related techniques), wherein the sinogram comprises a first axis defined by the angle around the circumference of the antiresonant HCF and a second axis defined by a cross-sectional distance defined by the antiresonant HCF, wherein the sinogram comprises a repeating pattern of pixel intensities in the direction of the first axis including along a central portion of the sinogram. The method proceeds to step 910 which includes extracting and interpolating a pixel intensity profile across the repeating pattern along the central portion of the sinogram at a predetermined angle along the first axis to generate an interpolated pixel intensity profile. The method proceeds to step 912 which includes determining dimensions and characteristics of a spacing between a pair of the plurality of tubular capillaries using the interpolated pixel intensity profile.

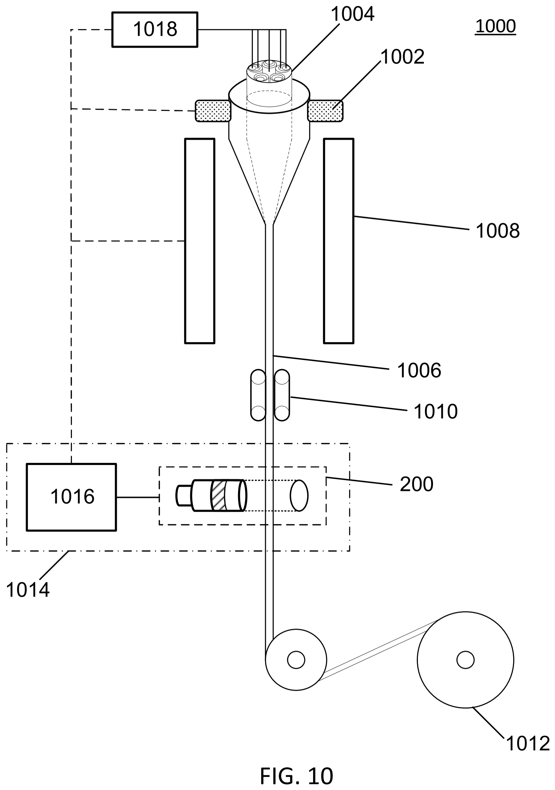

FIG. 10 shows a draw tower 1000 which includes a system 1014 for monitoring the internal structure of an antiresonant HCF. The draw tower 1000 is used to manufacture antiresonant HCF using a draw process. The draw tower 1000 comprises a mount 1002 for holding a preform 1004 from which an antiresonant HCF 1006 is drawn. The mount 1002 may be affixed to a lateral positioner (not depicted here) for moving the antiresonant HCF 1006 on the plane perpendicular to the direction of the fiber draw. The antiresonant HCF 1006 can be any of the examples illustrated in FIGs. 1B to 1E. Heat is applied to soften the glass preform using a draw furnace 1008 allowing it to be drawn into a fiber. A motor 1010 may be used to draw the antiresonant HCF 1006 from the draw furnace 1008. The antiresonant HCF cools once it exits the draw furnace and forms a hardened optical fiber that can then be wound up on a spool 1012. The draw tower 1000 may also comprise a pressure controller 1018 which supplies gas to the voids within the antiresonant HCF 1006 to control the differential pressure between the voids during manufacture. Controlling the heating parameters in the draw furnace 1008, the speed and force applied to the fiber as it is pulled through the furnace, the position of the preform within the draw furnace 1008, and the pressure applied to the voids within the antiresonant HCF enable control of the diameter and the internal geometry of the optical fiber.

The techniques for monitoring and measuring the internal structure of antiresonant HCFs can be integrated "in-line" into the draw tower. This means real-time data relating to the internal structure of the anti-resonant HCF can be monitored during manufacture. Such information can be used to adjust the drawing parameters including the temperature of the draw furnace, lateral position of the preform within the draw furnace, an amount of pressure applied to the tubular capillaries during draw and the draw speed.

FIG. 10 shows a system 1014 which utilizes an optical microscope to collect micrographs using the principles discussed in relation to FIGs. 2 to 4 previously. The system 1014 includes a measurement system 1016 configured to control the light source 202 and optical microscope 208, receive raw optical data and construct sinograms as discussed in reference to FIG. 4. The resulting sinograms may then be used by the measurement system to determine measurements relating to the internal structure of the antiresonant HCF 1006 such as those illustrated in FIGs. 5 to 8D. In some examples, the measurement system 1016 outputs values for internal structure measurements on a display. In other examples, the measurement system 1016 provides the measurements to one or more systems configured to adjust draw parameters in the draw tower 1000. As shown in FIG. 10, the measurement system 1016 may provide the measurements of the internal geometry of the antiresonant HCF to the draw furnace 1008, the lateral positioner connected to the mount 1002, and/or to the pressure controller 1018.

Alternatively or in addition to the other examples described herein, examples include any combination of the following:
Clause A. A method for monitoring the internal structure of an antiresonant hollow core fiber, HCF, the method comprising: positioning a light source and an optical microscope on opposing sides of a longitudinal section of an antiresonant HCF at a plurality of angles around a circumference of the antiresonant HCF, wherein the antiresonant HCF comprises an outer tubular cladding and an internal structure comprising a plurality of tubular capillaries extending longitudinally along the length of the antiresonant HCF which are attached to the inner surface of the tubular cladding, wherein the plurality of tubular capillaries define a hollow core extending longitudinally along the antiresonant HCF; illuminating the antiresonant HCF using the light source; detecting a plurality of micrographs at the plurality of angles using the optical microscope, wherein each micrograph comprises a pixel intensity pattern caused by light transmitted through the antiresonant HCF from the light source; constructing a sinogram from the plurality of micrographs, wherein the sinogram comprises a first axis defined by the angle around the circumference of the antiresonant HCF and a second axis defined by a cross-sectional distance defined by the antiresonant HCF, wherein the sinogram comprises a repeating pattern of pixel intensities in the direction of the first axis including along a central portion of the sinogram; extracting and interpolating a pixel intensity profile across the repeating pattern along the central portion of the sinogram at a predetermined angle along the first axis to generate an interpolated pixel intensity profile; and determining dimensions and characteristics of a spacing between a pair of the plurality of tubular capillaries using the interpolated pixel intensity profile.
Clause B. The method of clause A, wherein the repeating pattern of the sinogram comprises: a first pair of bright lines parallel to the first axis positioned towards the minimum and maximum extremes of the second axis of the sinogram, wherein the bright lines indicate relatively high pixel intensity compared to other areas of the sinogram; a second pair of bright lines parallel to the first axis positioned inside of the first pair of bright lines on the second axis; a pair of columns comprising a first pattern positioned inside the second pair of bright lines on the second axis; and the central portion comprising a second pattern positioned inside the pair of columns comprising the first pattern, wherein the second pattern is different to the first pattern.
Clause C. The method of clause A or clause B, wherein extracting and interpolating the pixel intensity profile comprises: selecting a section of the central portion of the sinogram based on a position of a known characteristic feature of the repeating pattern; and plotting pixel intensity with respect to pixel position across the section of the central portion of the sinogram.
Clause D. The method of clause C, wherein the known characteristic feature of the repeating pattern is: a pair of diagonal dark lines entirely contained within the central portion, wherein the dark lines indicate relatively low pixel intensity compared to other areas of the sinogram; and/or in between pairs of a diagonal bright line extending across the central portion, wherein the bright lines indicate relatively high pixel intensity compared to other areas of the sinogram; and/or the central part of a diagonal dark line extending across the central portion.
Clause E. The method of clause A or B, wherein extracting and interpolating the pixel intensity profile comprises: selecting a section of the central portion of the sinogram according to a predetermined angle on the first axis; and plotting pixel intensity with respect to pixel position across the section of the central portion of the sinogram.
Clause F. The method of any of clauses A to E, wherein extracting and interpolating the pixel intensity profile comprises: applying a spline interpolation to the extracted pixel intensity profile.
Clause G. The method of any of clauses A to F, wherein determining dimensions and characteristics of the spacing between a pair of the plurality of tubular capillaries comprises: determining the interpolated pixel intensity profile includes four pixel intensity minima positioned symmetrically relative to a center of the pixel intensity profile corresponding to the center of the sinogram along the first axis; determining a distance between the two centermost minima in the center of the interpolated intensity profile; and determining the spacing between the pair of tubular capillaries using the determined distance between the two centermost minima.
Clause H. The method of any of clauses A to F, wherein determining dimensions and characteristics of the spacing between a pair of the plurality of tubular capillaries comprises: determining that the pair of tubular capillaries are in contact by determining the interpolated pixel intensity profile includes three pixel intensity minima positioned symmetrically relative to a center of the pixel intensity profile corresponding to the center of the sinogram along the first axis.
Clause I. The method of any of clauses A to F, wherein a plurality of nested capillaries positioned inside the plurality of cladding capillaries and affixed to the inner surface of the outer cladding, the method further comprising determining that a cladding capillary is in contact with a nested capillary positioned inside the cladding capillary by determining that pixel intensity minima in the interpolated pixel intensity profile are arranged asymmetrically about the center of the pixel position axis of the pixel intensity profile relative to a center of the pixel intensity profile corresponding to the center of the sinogram along the first axis.
Clause J. The method of any of clauses A to I, wherein positioning the light source and the optical microscope on opposing sides of a longitudinal section of an antiresonant HCF at a plurality of angles around a circumference of the antiresonant HCF comprises: rotating the antiresonant HCF relative to the light source and optical microscope.
Clause K. The method of any of clauses A to J, wherein positioning the light source and the optical microscope on opposing sides of a longitudinal section of an antiresonant HCF at a plurality of angles around a circumference of the antiresonant HCF comprises: positioning the light source and the optical microscope downstream from a draw furnace in a draw tower; and wherein detecting the plurality of micrographs is performed as the antiresonant HCF is being drawn from the draw furnace.
Clause L. The method of any of clauses A to K, wherein extracting and interpolating the pixel intensity profile comprises: averaging the pixel intensity relative to the first axis of the sinogram extracts.
Clause M. The method of clause L, further comprising: applying a weighted average to the pixel intensities according to a time of acquisition of each pixel intensity.
Clause N. A system for monitoring the internal structure of an antiresonant hollow core fiber, HCF, wherein the antiresonant HCF comprises an outer tubular cladding and an internal structure comprising a plurality of tubular capillaries extending longitudinally along the length of the antiresonant HCF which are attached to the inner surface of the tubular cladding, wherein the plurality of tubular capillaries define a hollow core extending longitudinally along the antiresonant HCF, the system comprising: a light source; an optical microscope positionable on an opposing side of a longitudinal section of an antiresonant HCF at a plurality of angles around a circumference of the antiresonant HCF; a measurement system connected to the optical microscope and the light source, wherein the measurement system is configured to: illuminate the antiresonant HCF using the light source; detect a plurality of micrographs at the plurality of angles using the optical microscope, wherein each micrograph comprises a pixel intensity pattern caused by light transmitted through the antiresonant HCF from the light source; construct a sinogram from the plurality of micrographs, wherein the sinogram comprises a first axis defined by the angle around the circumference of the antiresonant HCF and a second axis defined by a cross-sectional distance defined by the antiresonant HCF, wherein the sinogram comprises a repeating pattern of pixel intensities in the direction of the first axis including along a central portion of the sinogram; extract and interpolate a pixel intensity profile across the repeating pattern along the central portion of the sinogram at a predetermined angle along the first axis to generate an interpolated pixel intensity profile; and determine dimensions and characteristics of a spacing between a pair of the plurality of tubular capillaries using the interpolated pixel intensity profile.
Clause O. Use of the system of clause N in a draw tower.

The term 'computer' or 'computing-based device' is used herein to refer to any device with processing capability such that it executes instructions. Those skilled in the art will realize that such processing capabilities are incorporated into many different devices and therefore the terms 'computer' and 'computing-based device' each include personal computers (PCs), servers, mobile telephones (including smart phones), tablet computers, set-top boxes, media players, games consoles, personal digital assistants, wearable computers, and many other devices.

The methods described herein are performed, in some examples, by software in machine readable form on a tangible storage medium e.g. in the form of a computer program comprising computer program code means adapted to perform all the operations of one or more of the methods described herein when the program is run on a computer and where the computer program may be embodied on a computer readable medium. The software is suitable for execution on a parallel processor or a serial processor such that the method operations may be carried out in any suitable order, or simultaneously.

Those skilled in the art will realize that storage devices utilized to store program instructions are optionally distributed across a network. For example, a remote computer is able to store an example of the process described as software. A local or terminal computer is able to access the remote computer and download a part or all of the software to run the program. Alternatively, the local computer may download pieces of the software as needed, or execute some software instructions at the local terminal and some at the remote computer (or computer network). Those skilled in the art will also realize that by utilizing conventional techniques known to those skilled in the art that all, or a portion of the software instructions may be carried out by a dedicated circuit, such as a digital signal processor (DSP), programmable logic array, or the like.

Any range or device value given herein may be extended or altered without losing the effect sought, as will be apparent to the skilled person.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

It will be understood that the benefits and advantages described above may relate to one embodiment or may relate to several embodiments. The embodiments are not limited to those that solve any or all of the stated problems or those that have any or all of the stated benefits and advantages. It will further be understood that reference to 'an' item refers to one or more of those items.

The operations of the methods described herein may be carried out in any suitable order, or simultaneously where appropriate. Additionally, individual blocks may be deleted from any of the methods without departing from the scope of the subject matter described herein. Aspects of any of the examples described above may be combined with aspects of any of the other examples described to form further examples without losing the effect sought.

The term 'comprising' is used herein to mean including the method blocks or elements identified, but that such blocks or elements do not comprise an exclusive list and a method or apparatus may contain additional blocks or elements.

Additionally, as used in this disclosure, phrases of the form "at least one of an A, a B, or a C," "at least one of A, B, and C," and the like, should be interpreted to select at least one from the group that comprises "A, B, and C." Unless explicitly stated otherwise in connection with a particular instance in this disclosure, this manner of phrasing does not mean "at least one of A, at least one of B, and at least one of C." As used in this disclosure, the example "at least one of an A, a B, or a C," would cover any of the following selections: {A}, {B}, {C}, {A, B}, {A, C}, {B, C}, and {A, B, C}.

It will be understood that the above description is given by way of example only and that various modifications may be made by those skilled in the art. The above specification, examples and data provide a complete description of the structure and use of exemplary embodiments. Although various embodiments have been described above with a certain degree of particularity, or with reference to one or more individual embodiments, those skilled in the art could make numerous alterations to the disclosed embodiments without departing from the scope of this specification.

## Claims

1. A method (900) for monitoring the internal structure of an antiresonant hollow core fiber, HCF, (100) the method comprising:
positioning (902) a light source (202) and an optical microscope (208, 402) on opposing sides of a longitudinal section of an antiresonant HCF at a plurality of angles around a circumference of the antiresonant HCF, wherein the antiresonant HCF comprises an outer tubular cladding (102) and an internal structure comprising a plurality of tubular capillaries (104) extending longitudinally along the length of the antiresonant HCF which are attached to the inner surface of the tubular cladding, wherein the plurality of tubular capillaries (104) define a hollow core (106) extending longitudinally along the antiresonant HCF;
illuminating (904) the antiresonant HCF using the light source (202);
detecting (906) a plurality of micrographs (206) at the plurality of angles using the optical microscope, wherein each micrograph comprises a pixel intensity pattern caused by light transmitted through the antiresonant HCF from the light source;
constructing (908) a sinogram (406) from the plurality of micrographs (206), wherein the sinogram (406) comprises a first axis defined by the angle around the circumference of the antiresonant HCF and a second axis defined by a cross-sectional distance defined by the antiresonant HCF, wherein the sinogram comprises a repeating pattern of pixel intensities in the direction of the first axis including along a central portion of the sinogram;
extracting (910) and interpolating a pixel intensity profile across the repeating pattern along the central portion of the sinogram at a predetermined angle along the first axis to generate an interpolated pixel intensity profile; and
determining (912) dimensions and characteristics of a spacing between a pair of the plurality of tubular capillaries (104) using the interpolated pixel intensity profile.

2. The method of claim 1, wherein the repeating pattern of the sinogram comprises:
a first pair of bright lines parallel to the first axis positioned towards the minimum and maximum extremes of the second axis of the sinogram, wherein the bright lines indicate relatively high pixel intensity compared to other areas of the sinogram;
a second pair of bright lines parallel to the first axis positioned inside of the first pair of bright lines on the second axis;
a pair of columns comprising a first pattern positioned inside the second pair of bright lines on the second axis; and
the central portion comprising a second pattern positioned inside the pair of columns comprising the first pattern, wherein the second pattern is different to the first pattern.

3. The method of claim 1 or claim 2, wherein extracting and interpolating the pixel intensity profile comprises:
selecting a section of the central portion of the sinogram based on a position of a known characteristic feature of the repeating pattern; and
plotting pixel intensity with respect to pixel position across the section of the central portion of the sinogram.

4. The method of claim 3, wherein the known characteristic feature of the repeating pattern is:
a pair of diagonal dark lines entirely contained within the central portion, wherein the dark lines indicate relatively low pixel intensity compared to other areas of the sinogram; and/or
in between pairs of a diagonal bright line extending across the central portion, wherein the bright lines indicate relatively high pixel intensity compared to other areas of the sinogram; and/or
the central part of a diagonal dark line extending across the central portion.

5. The method of claims 1 or 2, wherein extracting and interpolating the pixel intensity profile comprises:
selecting a section of the central portion of the sinogram according to a predetermined angle on the first axis; and
plotting pixel intensity with respect to pixel position across the section of the central portion of the sinogram.

6. The method of any preceding claim, wherein extracting and interpolating the pixel intensity profile comprises:
applying a spline interpolation to the extracted pixel intensity profile.

7. The method of any preceding claim, wherein determining dimensions and characteristics of the spacing between a pair of the plurality of tubular capillaries comprises:
determining the interpolated pixel intensity profile includes four pixel intensity minima positioned symmetrically relative to a center of the pixel intensity profile corresponding to the center of the sinogram along the first axis;
determining a distance between the two centermost minima in the center of the interpolated intensity profile; and
determining the spacing between the pair of tubular capillaries using the determined distance between the two centermost minima.

8. The method of any of claims 1 to 6, wherein determining dimensions and characteristics of the spacing between a pair of the plurality of tubular capillaries comprises:
determining that the pair of tubular capillaries are in contact by determining the interpolated pixel intensity profile includes three pixel intensity minima positioned symmetrically relative to a center of the pixel intensity profile corresponding to the center of the sinogram along the first axis.

9. The method of any of claims 1 to 6, wherein a plurality of nested capillaries positioned inside the plurality of cladding capillaries and affixed to the inner surface of the outer cladding, the method further comprising:
determining that a cladding capillary is in contact with a nested capillary positioned inside the cladding capillary by determining that pixel intensity minima in the interpolated pixel intensity profile are arranged asymmetrically about the center of the pixel position axis of the pixel intensity profile relative to a center of the pixel intensity profile corresponding to the center of the sinogram along the first axis.

10. The method of any preceding claim, wherein positioning the light source and the optical microscope on opposing sides of a longitudinal section of an antiresonant HCF at a plurality of angles around a circumference of the antiresonant HCF comprises:
rotating the antiresonant HCF relative to the light source and optical microscope.

11. The method of any preceding claim, wherein positioning the light source and the optical microscope on opposing sides of a longitudinal section of an antiresonant HCF at a plurality of angles around a circumference of the antiresonant HCF comprises:
positioning the light source and the optical microscope downstream from a draw furnace in a draw tower; and
wherein detecting the plurality of micrographs is performed as the antiresonant HCF is being drawn from the draw furnace.

12. The method of any preceding claim, wherein extracting and interpolating the pixel intensity profile comprises:
averaging the pixel intensity relative to the first axis of the sinogram extracts.

13. The method of claim 12, further comprising:
applying a weighted average to the pixel intensities according to a time of acquisition of each pixel intensity.

14. A system (1014) for monitoring the internal structure of an antiresonant hollow core fiber, HCF, (100), wherein the antiresonant HCF comprises an outer tubular cladding (102) and an internal structure comprising a plurality of tubular capillaries (104) extending longitudinally along the length of the antiresonant HCF which are attached to the inner surface of the tubular cladding, wherein the plurality of tubular capillaries (104) define a hollow core (106) extending longitudinally along the antiresonant HCF, the system comprising:
a light source (202);
an optical microscope (208, 402) positionable on an opposing side of a longitudinal section of an antiresonant HCF at a plurality of angles around a circumference of the antiresonant HCF;
a measurement system (1016) connected to the optical microscope (208, 402) and the light source (202), wherein the measurement system is configured to:
illuminate the antiresonant HCF using the light source (202);
detect a plurality of micrographs (206) at the plurality of angles using the optical microscope, wherein each micrograph comprises a pixel intensity pattern caused by light transmitted through the antiresonant HCF from the light source;
construct a sinogram (406) from the plurality of micrographs (206), wherein the sinogram (406) comprises a first axis defined by the angle around the circumference of the antiresonant HCF and a second axis defined by a cross-sectional distance defined by the antiresonant HCF, wherein the sinogram comprises a repeating pattern of pixel intensities in the direction of the first axis including along a central portion of the sinogram;
extract and interpolate a pixel intensity profile across the repeating pattern along the central portion of the sinogram at a predetermined angle along the first axis to generate an interpolated pixel intensity profile; and
determine dimensions and characteristics of a spacing between a pair of the plurality of tubular capillaries (104) using the interpolated pixel intensity profile.

15. Use of the system (1014) of claim 14 in a draw tower (1000).
